# EUROPÄISCHE PATENTANMELDUNG

(11) **EP 2 885 974 A2**
(43) Veröffentlichungstag der Anmeldung: **24.06.2015**
(21) Anmeldenummer: 14193575.9
(22) Anmeldetag: 18.11.2014
(51) Int. Cl.: A21D 13/00

(54) **Verfahren zur Herstellung von Dauerbackware sowie Dauerbackware**

(30) Priorität: 23.12.2013 DE 102013114753
(71) Anmelder: NORA Banketbakkerij B.V., 6247 ER Gronsveld (NL)
(72) Erfinder: Raeven, Rudy Elise Guillaume, 6247 ER Gronsveld (NL)
(74) Vertreter: Kohlmann, Kai

(57) **Zusammenfassung**

Die Erfindung betrifft ein Verfahren zum Herstellen mehrlagiger Dauerbackware sowie eine Dauerbackware mit jeweils einem oberen und ein unteren plattenförmigen Gebäckteil und einer zwischen den beiden Gebäckteilen befestigten, vorgefertigten plattenförmigen Füllung.

Um eine kürzere Herstellzeit zu ermöglichen, umfasst das Verfahren die folgenden Schritte:
- Herstellen oder Bereitstellen der oberen und unteren Gebäckteile,
- Herstellen oder Bereitstellen der Füllungen, wobei jede Füllung mindestens eine sich zwischen den Oberflächen der Füllung erstreckende Öffnung aufweist,
- Aufbringen eines Zusatzstoffes auf die nach oben weisende Oberfläche eines unteren Gebäckteils,
- Auflegen einer Füllung auf das mit dem Zusatzstoff versehene untere Gebäckteil,
- Auflegen und Andrücken eines oberen Gebäckteils auf die Füllung.

## Beschreibung

Die Erfindung betrifft ein Verfahren zum Herstellen mehrlagiger Dauerbackwaren mit jeweils einem oberen und einem unteren plattenförmigen Gebäckteil und einer zwischen den beiden Gebäckteilen befestigten, vorgefertigten plattenförmigen Füllung. Außerdem betrifft die Erfindung eine mehrlagige Dauerbackware.

Bei einer erfindungsgemäßen Dauerbackware ist zwischen einem oberen und einem unteren, im Wesentlichen jeweils plattenförmigen Gebäckteil eine plattenförmige Füllung angebracht. Die einzeln hergestellten und handhabbaren Teile werden mittels eines Fügeverfahrens zusammengesetzt. Hierzu wird die Füllung mittels Zusatzstoffen mit den beiden Gebäckteilen verbunden. Durch die plattenförmige Ausgestaltung der Füllung ist es möglich, diese exakt zu dimensionieren und saubere Seitenflächen auszubilden, die der Dauerbackware ein optisch ansprechendes Aussehen verleihen. Die Füllung besteht insbesondere aus einer Schokoladentafel. Selbstverständlich kann die Füllung jedoch auch aus anderen Materialien bestehen. Der Zusatzstoff besteht aus einem Material, das geeignet ist, um die plattenförmige Füllung mit den plattenförmigen Gebäckteilen zu verkleben.

Eine gattungsgemäße mehrlagige Dauerbackware sowie ein Verfahren zu deren Herstellung ist aus der DE 197 41 717 C1 bekannt. Das Herstellungsverfahren weist folgende Arbeitsschritte auf:
- Herstellen oder Bereitstellen der Gebäckteile
- Herstellen oder Bereitstellen der Füllung
- Positionieren der Füllung und eines oberen Gebäckteiles
- Aufbringen des Zusatzstoffs auf die Oberseite der Füllung
- Umsetzen des oberen Gebäckteils
- Andrücken des oberen Gebäckteils auf den Zusatzstoff und die Füllung
- Positionieren eines unteren Gebäckteils
- Aufbringen eines Zusatzstoffs auf die Oberseite des unteren Gebäckteils
- Auflegen des oberen Gebäckteils und der an diesem befestigten Füllung auf das untere Gebäckteil
- Andrücken des oberen Gebäckteils und der Füllung auf den Zusatzstoff und das untere Gebäckteil.

Vor dem Auflegen des oberen Gebäckteils und der an diesem befestigten Füllung auf das untere Gebäckteil ist es bei dem bekannten Verfahren erforderlich, dass der auf die Oberseite der Füllung zunächst aufgebrachte Zusatzstoff erstarrt bzw. ausgehärtet ist. Erst anschließend kann das obere Gebäckteil mit der Füllung weiter verarbeitet werden. Die Weiterverarbeitung erfolgt dergestalt, dass auf das untere Gebäckteil der Zusatzstoff auf dessen nach oben weisende Oberfläche aufgebracht wird und anschließend das obere Gebäckteil mit der ausgehärteten Füllung exakt positioniert und aufgesetzt wird. Alternativ kann das obere Gebäckteil und die an diesem befestigte Füllung nach dem Erstarren um 180 Grad gewendet werden. Nach dem Aufbringen des Zusatzstoffes auf die noch freie Oberfläche wird das andere Gebäckteil exakt positioniert und aufgelegt.

Ein Nachteil des bekannten Verfahrens besteht darin, dass der Zusatzstoff sowohl auf die Oberseite der Füllung als auch die Oberseite des unteren Gebäckteils aufgebracht werden muss. Darüber hinaus muss nach dem Aufbringen des Zusatzstoffes auf die Oberseite der Füllung der Zusatzstoff vor der Weiterverarbeitung zunächst aushärten.

Die FR 2 744 593 A1 offenbart eine Backware mit einem unteren plattenförmigen Gebäckteil, einem oberen plattenförmigen Gebäckteil und einem zwischen den beiden Gebäckteilen angeordneten Zwischenteil, welches aus Schokolade bestehen kann. Des Weiteren kann zwischen dem Zwischenteil aus Schokolade und dem unteren Gebäckteil beziehungsweise dem oberen Gebäckteil eine Schicht aus einem fließfähigen Material angeordnet sein, das sich über die Flächen der Gebäckteile und des Zwischenteils ausbreitet. Das Zwischenteil kann eine Reihe von kleinen Löchern aufweisen, um die Zerkleinerung im Mund zu erleichtern.

Die EP 1 825 756 A1 offenbart eine Cremefüllung zwischen zwei Waffelblättern. Ungefähr mittig in der Cremefüllung ist eine essbare und plastisch verformbare Trennschicht vorgesehen. Diese wird beispielsweise von einem Film aus getrockneter Marmelade gebildet. Die Flexibilität der Trennschicht ist zusammen mit in der Cremefüllung eingebetteten Festkörpern für die Verbindung zwischen den Waffelblättern verantwortlich. Weist die Trennschicht zudem noch Durchbrüche auf, können die Cremeschichten auf beiden Seiten der Trennschicht ineinander fließen und die Festkörper rieglartig in die Durchbrüche eingreifen. Hierdurch soll sich ein besonders guter Halt zwischen den beiden Waffelblättern ergeben.

Die US 1 942 423 A offenbart ein Sandwich mit einer Trenneinrichtung zwischen den beiden Brotscheiben, wobei die Trenneinrichtung mit Durchbrüchen eine fließfähige Füllung umgibt, die sich zwischen den beiden Brotscheiben befindet.

Ausgehend von diesem Stand der Technik liegt der Erfindung die Aufgabe zu Grunde, ein Verfahren zur Herstellung einer gattungsgemäßen mehrlagigen Dauerbackware mit kürzerer Herstellzeit zu schaffen, das insbesondere weniger Verfahrensschritte erfordert und keine Wartezeiten zum Aushärten des Zusatzstoffes während der Herstellung erfordert. Des Weiteren soll eine nach dem erfindungsgemäßen Verfahren herstellbare mehrlagige Dauerbackware vorgeschlagen werden.

Diese Aufgabe wird durch ein Verfahren mit den Merkmalen des Anspruchs 1 und eine mehrlagige Dauerbackware mit den Merkmalen des Anspruchs 10 gelöst.

Indem jede Füllung mindestens eine sich zwischen den Oberflächen der Füllung erstreckende Öffnung aufweist, entfällt die Notwendigkeit den Zusatzstoff zunächst auf die Füllung und anschließend auf eines der Gebäckteile aufzubringen. Erfindungsgemäß genügt es vielmehr, einmalig einen Zusatzstoff auf die nach oben weisende Oberfläche eines unteren Gebäckteils aufzubringen. Dabei wird die Menge des aufgebrachten Zusatzstoffs derart bestimmt, dass der Zusatzstoff beim Auflegen der Füllung durch die mindestens eine Öffnung aufsteigt und mit dem oberen Gebäckteil beim Auflegen und Andrücken in Kontakt gelangt. Durch dieses Herstellverfahren wird nicht nur die Anzahl der Arbeitsschritte reduziert, sondern darüber hinaus die Wartezeit für das Aushärten des Zusatzstoffs vermieden. Gemäß der Erfindung werden sowohl die Füllung als auch das obere Gebäckteil aufgelegt, bevor der Zusatzstoff ausgehärtet ist. Die verwendeten Zusatzstoffe umfassen Schokocreme und/oder Zucker und/oder Milchpulver und/oder Fette.

In vorteilhafter Ausgestaltung der Erfindung werden die oberen und/oder unteren Gebäckteile mit muldenförmigen Vertiefungen zur Aufnahme des Zusatzstoffes hergestellt oder bereitgestellt. Die muldenförmigen Vertiefungen bewirken, dass die beiden plattenförmigen Gebäckteile auch bei leicht schwankender Menge an Zusatzstoff stets parallel zu der plattenförmigen Füllung liegen. Darüber hinaus wird ein seitliches Austreten des Zusatzstoffes beim Auflegen und Andrücken des oberen Gebäckteils auf die Füllung vermieden. Die Vertiefungen können beim Backen jedes unteren und/oder oberen Gebäckteils mit Hilfe einer entsprechend geformten Backform ohne zusätzlichen Herstellaufwand erzeugt werden.

Die mindestens eine sich zwischen den Oberflächen der Füllung erstreckende Öffnung beeinträchtigt weder die optische Erscheinung, der nach dem erfindungsgemäßen Verfahren hergestellten Dauerbackwaren, noch deren Geschmack. Der durch die Öffnung entfallende Schokoladenanteil kann durch eine geringfügig größere Dicke der plattenförmigen Füllung ausgeglichen werden.

Die Form der plattenförmigen Gebäckteile sowie der zugehörigen Füllung stimmt vorzugsweise überein und kann runde, ovale oder sonstige Formen aufweisen. Die Füllung selbst kann ein- oder mehrlagig ausgeführt sein. Eine mehrlagige Füllung weist beispielsweise eine Lage aus dunkler und eine Lage aus heller Schokolade auf. Die Seitenflächen der Füllung können bündig mit den Seitenflächen der Dauerbackware abschließen. Alternativ ist es möglich, die Seitenflächen der Gebäckteile einerseits und der Füllung andererseits versetzt zueinander anzuordnen.

Der Zusatzstoff wird vorzugsweise lediglich punktuell an einer oder mehreren Stellen auf die nach oben weisende Oberfläche jedes unteren Gebäckteils aufgebracht. Hierdurch wird mit einem Minimum an Zusatzstoff die erforderliche Verbindung zwischen den verschiedenen Teilen der Dauerbackware hergestellt. Selbstverständlich ist es jedoch auch möglich den Zusatzstoff großflächiger und damit in größeren Mengen aufzutragen. In jedem Fall sollte der Auftrag des Zusatzstoffs unmittelbar unterhalb der Öffnung der aufzulegenden Füllung erfolgen, damit der Zusatzstoff einwandfrei durch die mindestens eine Öffnung mit dem oberen Gebäckteil in Kontakt gelangt.

In einem bevorzugten, automatisierten Verfahren zur Herstellung der mehrlagigen Dauerbackware werden vor dem Aufbringen des Zusatzstoffes zunächst das obere Gebäckteil, die Füllung und das untere Gebäckteil hintereinander auf einem Förderer, insbesondere einem Bandförderer positioniert. Die zur Herstellung einer sandwichartigen Dauerbackware erforderlichen Teile liegen sodann positioniert hintereinander auf dem Förderer und können den entsprechenden Handhabungswerkzeugen zur Durchführung des erfindungsgemäßen Herstellungsverfahrens nacheinander zugeführt werden:
- In einem ersten Verfahrensschritt wird auf das positionierte untere Gebäckteil der Zusatzstoff mittels einer Dosiervorrichtung an mindestens einer Stelle der Oberfläche punktförmig aufgetragen.
- Die in Förderrichtung vor dem unteren Gebäckteil auf dem Förderer positionierte Füllung wird anschließend mittels eines Sauggreifers von dem Förderer abgehoben. Nach dem Abheben der Füllung wird die Füllung durch eine Vorwärtsbewegung des Förderers oberhalb des unteren Gebäckteils positioniert, auf dem zuvor der Zusatzstoff aufgebracht wurde.
- Nach dem Positionieren erfolgt das Auflegen der Füllung durch Absenken des Sauggreifers auf das unterhalb der Füllung positionierte Gebäckteil.
- Anschließend wird das in Förderrichtung vor der Füllung auf dem Förderer positionierte obere Gebäckteil mit Hilfe eines weiteren Sauggreifers von dem Förderer abgehoben und oberhalb der Füllung dadurch positioniert, dass nach dem Abheben des oberen Gebäckteils der Förderer das untere Gebäckteil mit der darauf angeordneten Füllung unterhalb des Sauggreifers positioniert.
- Anschließend erfolgt durch Absenken des Sauggreifers das Auflegen des oberen Gebäckteils auf die Füllung. Das nachfolgende Andrücken erfolgt ebenfalls mit Hilfe des Sauggreifers oder eines anderen Andrückwerkzeugs, wobei der Zusatzstoff durch die mindestens eine Öffnung in der Füllung mit dem oberen Gebäckteil in Kontakt gelangt und dadurch die erforderliche stoffschlüssige Verbindung zwischen den Gebäckteilen und der Füllung herstellt.

Sofern sowohl das untere als auch das obere Gebäckteil eine der Füllung zugewandte innere Oberfläche aufweisen, die sich von einer äußeren Oberfläche unterscheidet, wird das untere Gebäckteil mit nach oben weisender innerer Oberfläche und das obere Gebäckteil mit nach unten weisender innerer Oberfläche auf dem Förderer positioniert.

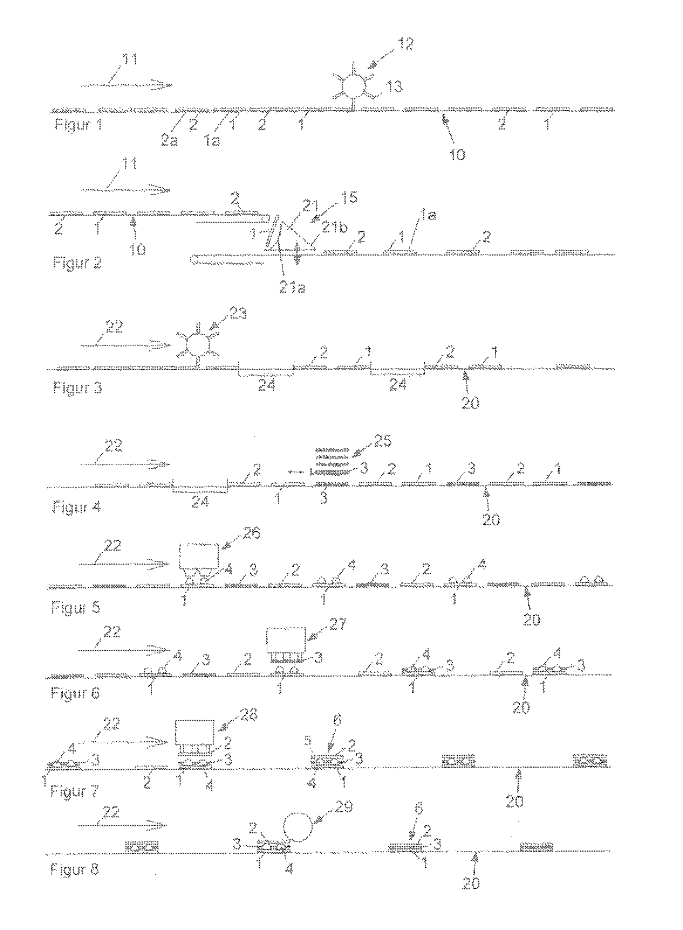

Nachfolgend wird die Erfindung anhand eines in den Figuren 1 - 8 schematisch dargestellten Herstellungsprozesses näher erläutert:
Zunächst werden untere und obere Gebäckteile (1, 2) gebacken, aus denen zusammen mit einer plattenförmigen Füllung (3), insbesondere in Form einer Schokoladentafel, mehrlagige Dauerbackwaren (6) herstellbar sind.

Sowohl das untere Gebäckteil (1) als auch das obere Gebäckteil (2) weisen eine der Füllung (3) zugewandte innere Oberfläche (1a, 2a) auf, die sich von einer nach außen weisenden Oberfläche unterscheidet. Die inneren Oberflächen (1a, 2a) sind insbesondere eben, während die äußeren Oberflächen beispielsweise eine Strukturierung aufweisen können.

Die gebackenen, unteren und oberen Gebäckteile (1, 2) werden in wechselnder Folge mit ihren inneren Oberflächen (1a, 2a) auf einen ersten Förderer (10) aufgelegt, der die Gebäckteile (1, 2) in einer Förderrichtung (11) fördert. Zum vergleichmäßigen des Abstandes zwischen den Gebäckteilen (1, 2) auf dem ersten Förderer (10) ist oberhalb des ersten Förderers (10) eine Positioniereinrichtung (12) angeordnet. Die Positioniereinrichtung (12) umfasst ein Rad, von dem sich in regelmäßigen Abständen Arme (13) radial erstrecken, die mit den in Förderrichtung (11) vorderen Seitenflächen der Gebäckteile (1, 2) in Eingriff bringbar sind. Am Ende des Förderwegs des ersten Förderers (10) werden die in Förderrichtung (11) hinter der Positioniereinrichtung (12) in regelmäßigem Abstand auf dem ersten Förderer (10) liegenden Gebäckteile (1, 2) auf einen zweiten, unterhalb des ersten Förderers (10) angeordneten Förderer (20) übergeben.

Im Bereich der Übergabe (15) befindet sich eine Umsetzvorrichtung (21), die derart eingerichtet ist, dass jedes untere Gebäckteil (1) an deren hinterer Flanke (21a) abgleitet und dadurch gewendet wird, so dass das untere Gebäckteil (1) mit nach oben weisender innerer Oberfläche (1a) auf einem zweiten Förderer (20) zu liegen kommt. Die oberen Gebäckteile (2) gleiten indes auf der vorderen schrägen Ebene (21b) der Umsetzvorrichtung (21) auf den zweiten Förderer (20) auf, so dass diese mit ihrer inneren Oberfläche (2a) auf der Oberfläche des zweiten Förderers (20) zu liegen kommen.

Das selektive Abgleiten der unteren Gebäckteile (1) an der hinteren Flanke (21a) der Umsetzvorrichtung (21) wird durch eine Vertikalbewegung der Umsetzvorrichtung eingeleitet, die die hintere Flanke (21a) in den Förderweg (11) des unteren Gebäckteils (1) schiebt, so dass dessen Seitenfläche an die hintere Flanke (21a) stößt, wodurch der Wendevorgang und die Übergabe an den zweiten Förderer (20) eingeleitet wird.

In Förderrichtung (22) des zweiten Förderers (20) hinter der Umsetzvorrichtung (21) befindet sich eine weitere Positioniereinrichtung (23), die entsprechend der Positioniereinrichtung (12) aufgebaut ist. Die Positioniereinrichtung (23) positioniert jeweils ein unteres und ein oberes Gebäckteil (1, 2) mit gleich bleibendem Abstand (24) zu einem darauffolgenden unteren und oberen Gebäckteil (1, 2).

In Förderrichtung (22) hinter der Positioniereinrichtung (23) befindet sich ein Absetzer (25) zum Absetzen und Positionieren jeweils einer Füllung (3) in dem Bereich zwischen jeweils einem unteren und einem oberen Gebäckteil (1, 2). Nach dem Positionieren der Füllung (3) befinden sich in gleichmäßigem Abstand hintereinander jeweils ein unteres Gebäckteil (1), eine Füllung (3) sowie ein oberes Gebäckteil (2).

In Förderrichtung (22) hinter dem Absetzer (25) befindet sich eine Dosiervorrichtung (26), mit der an zwei Stellen auf der inneren Oberfläche (1a) des unteren Gebäckteils (1) ein Zusatzstoff (4) punktuell aufgebracht wird (vgl. Figur 5).

In Förderrichtung (22) hinter der Dosiervorrichtung (26) befindet sich eine erste Greifvorrichtung (27) zum Abheben der Füllung (3) von dem zweiten Förderer (20), die sich unmittelbar vor dem mit Zusatzstoff (4) versehenen unteren Gebäckteil (1) befindet (vgl. Figur 6). Die abgehobene Füllung (3) wird oberhalb des unteren Gebäckteils (1) positioniert, indem der zweite Förderer (20) das untere Gebäckteil (1) unter die Füllung (3) verfährt. Sobald das untere Gebäckteil (1) diese Position eingenommen hat, wird die Füllung (3) mit Hilfe der ersten Greifvorrichtung (27) auf dem unteren Gebäckteil (1) abgelegt, wodurch der Zusatzstoff (4) durch die beiden Öffnungen (5) in der Füllung (3) aufsteigt, wie dies schematisch in der linken Bildhälfte von Figur 7 erkennbar ist.

In Förderrichtung (22) hinter der ersten Greifvorrichtung (27) befindet sich eine zweite Greifvorrichtung (28), die das in Förderrichtung (22) vor dem unteren, mit Füllung (3) versehenen Gebäckteil (1) befindliche obere Gebäckteil (2) von der Oberfläche des zweiten Förderers (20) abhebt und oberhalb der auf dem unteren Gebäckteil (1) angeordneten Füllung (3) dadurch positioniert, dass das untere Gebäckteil (1) zusammen mit der Füllung (3) von dem zweiten Förderer (20) unter das obere, angehobene Gebäckteil (2) verfahren wird. Nach diesem Positioniervorgang wird das obere Gebäckteil (2) auf die Füllung (3) aufgelegt.

In Förderrichtung (22) hinter der zweiten Greifvorrichtung (28) befindet sich eine Andrückvorrichtung (29) in Form einer auf der äußeren Oberfläche des oberen Gebäckteils (2) ablaufenden Rolle, mit deren Hilfe ein Andrücken des oberen Gebäckteils (2) auf die Füllung (3) erfolgt. Hierdurch gelangt der Zusatzstoff (4) mit dem oberen Gebäckteil (2) in Kontakt. Anschließend kann die fertig gestellte mehrlagige Dauerbackware (6) von dem Förderer entnommen und verpackt werden.

**Bezugszeichenliste**

| **Nr.** | **Bezeichnung** |
|---|---|
| 1 | unteres Gebäckteil |
| 1a | innere Oberflächen |
| 2 | oberes Gebäckteil |
| 2a | innere Oberflächen |
| 3 | Füllung |
| 4 | Zusatzstoff |
| 5 | Öffnungen |
| 6 | Dauerbackware |
| | |
| 10 | Erster Förderer |
| 11 | Förderrichtung |
| 12 | Positioniereinrichtung |
| 13 | Arme |
| 14 | Rad |
| 15 | Übergabe |
| | |
| 20 | Zweiter Förderer |
| 21 | Umsetzvorrichtung |
| 21a | hintere Flanke |
| 21b | schräge Ebene |
| 22 | Förderrichtung |
| 23 | Positioniereinrichtung |
| 24 | Abstand |
| 25 | Absetzer |
| 26 | Dosiervorrichtung |
| 27 | Erste Greifvorrichtung |
| 28 | Zweite Greifvorrichtung |
| 29 | Andrückvorrichtung |

## Patentansprüche

1. Verfahren zum Herstellen mehrlagiger Dauerbackware (6) mit jeweils einem oberen und ein unteren plattenförmigen Gebäckteil (1, 2) und einer zwischen den beiden Gebäckteilen befestigten, vorgefertigten plattenförmigen Füllung (3), aufweisend die Schritte:
- Bereitstellen der oberen und unteren Gebäckteile (1, 2),
- Bereitstellen der vorgefertigten Füllungen (3), wobei jede Füllung (3) mindestens eine sich zwischen den Oberflächen der Füllung erstreckende Öffnung (5) aufweist,
- Aufbringen eines Zusatzstoffes (4) auf die nach oben weisende Oberfläche eines unteren Gebäckteils (1),
- Auflegen einer Füllung (3) auf das mit dem Zusatzstoff (4) versehene untere Gebäckteil (1),
- Auflegen und Andrücken eines oberen Gebäckteils (2) auf die Füllung (3), wobei
- die Menge des aufgebrachten Zusatzstoffs (4) derart bestimmt wird, dass der Zusatzstoff (4) durch die mindestens eine Öffnung (5) in der Füllung (3) aufsteigt und mit dem oberen Gebäckteil (2) beim Auflegen und Andrücken in Kontakt gelangt.

2. Verfahren nach Anspruch 1, **dadurch gekennzeichnet, dass** die oberen und/oder unteren Gebäckteile (1,2) mit muldenförmigen Vertiefungen zur Aufnahme des Zusatzstoffes (4) hergestellt oder bereitgestellt werden.

3. Verfahren nach Anspruch 2, **dadurch gekennzeichnet, dass** die Vertiefungen beim Backen jedes unteren und/oder oberen Gebäckteils (1, 2) mit Hilfe einer Backform erzeugt werden.

4. Verfahren nach einem der Ansprüche 1 bis 3, **dadurch gekennzeichnet, dass** der Zusatzstoff (4) lediglich punktuell an einer oder mehreren Stellen auf die nach oben weisende Oberfläche jedes unteren Gebäckteils (1) aufgebracht wird.

5. Verfahren nach einem der Ansprüche 1 bis 4, **dadurch gekennzeichnet, dass** vor dem Aufbringen des Zusatzstoffes (4) zunächst das obere Gebäckteil (2), die Füllung (3) und das untere Gebäckteil (1) hintereinander auf einem Förderer positioniert werden.

6. Verfahren nach Anspruch 5, **dadurch gekennzeichnet, dass** die Füllung (3) vor dem Auflegen auf dem mit dem Zusatzstoff (4) versehenen unteren Gebäckteil (1) von dem Förderer abgehoben und oberhalb des unteren Gebäckteils (1) positioniert wird.

7. Verfahren nach Anspruch 5 oder 6, **dadurch gekennzeichnet, dass** das obere Gebäckteil (2) vor dem Auflegen und Andrücken auf die Füllung (3) von dem Förderer abgehoben und oberhalb der Füllung (3) positioniert wird.

8. Verfahren nach Anspruch 6 oder 7, **dadurch gekennzeichnet, dass** das Positionieren nach dem Abheben der Füllung (3) und /oder des oberen Gebäckteils (2) mittels einer Bewegung des Förderers erfolgt.

9. Verfahren nach einem der Ansprüche 5 bis 8, **dadurch gekennzeichnet, dass** sowohl das untere als auch das obere Gebäckteil (1, 2) eine der Füllung (3) zugewandte, ebene innere Oberfläche (1a, 2a) aufweisen, die sich von einer äußeren Oberfläche unterscheidet, wobei das untere Gebäckteil (1) mit nach oben weisender, ebener innerer Oberfläche (1a) und das obere Gebäckteil (2) mit nach unten weisender, ebener innerer Oberfläche (2a) auf dem Förderer () positioniert werden.

10. Mehrlagige Dauerbackware (6) mit jeweils einem oberen und ein unteren plattenförmigen Gebäckteil (1, 2), einer zwischen den beiden Gebäckteilen angeordneten, vorgefertigten plattenförmigen Füllung (3) sowie einem Zusatzstoff (4) zum Verbinden der Füllung (3) mit den Gebäckteilen (1, 2), wobei die Füllung (3) mindestens eine sich zwischen den Oberflächen der Füllung (3) erstreckende Öffnung (5) aufweist, **dadurch gekennzeichnet, dass** der Zusatzstoff (4) durch die mindestens eine Öffnung (5) in der Füllung (3) sowohl mit dem oberen Gebäckteil (2) als auch dem unteren Gebäckteil (1) in Kontakt steht, die vorgefertigte, plattenförmige Füllung (3) formstabil ist und der Zusatzstoff (4) aus dem gleichen Material wie die Füllung (3) besteht.

11. Mehrlagige Dauerbackware nach Anspruch 10, **dadurch gekennzeichnet, dass** sowohl das untere als auch das obere Gebäckteil (1, 2) eine der Füllung (3) zugewandte, ebene innere Oberfläche (1a, 2a) aufweisen, die sich von einer äußeren Oberfläche unterscheidet.

12. Mehrlagige Dauerbackware nach Anspruch 10 oder 11,
**dadurch gekennzeichnet, dass** die oberen und/oder unteren Gebäckteile (1, 2) muldenförmige Vertiefungen aufweisen, die mit dem Zusatzstoff (4) in Kontakt stehen.
